# EUROPÄISCHE PATENTSCHRIFT

(11) **EP 1 350 606 B1**
(45) Veröffentlichungstag und Bekanntmachung des Hinweises auf die Patenterteilung: **02.06.2004**
(21) Anmeldenummer: 02007685.7
(22) Anmeldetag: 05.04.2002
(51) Int. Cl.: B25J 15/02

(54) **Fluidbetätigter Greifer**
Fluid actuated gripper
Organe de préhension actionné par fluide

(43) Veröffentlichungstag der Anmeldung: 08.10.2003
(73) Patentinhaber: FESTO AG & Co, 73734 Esslingen (DE)
(72) Erfinder: Risle, Andreas, 73734 Esslingen (DE); Stingel, Jürgen, 70180 Stuttgart (DE)
(74) Vertreter: Abel, Martin, Dipl.-Ing.

(56) Entgegenhaltungen:
- DE-A- 3 932 532
- GB-A- 2 041 262
- JP-A- 51 111 578
- RO-A- 101 596
- BACKE W ET AL: "PROGRAMMIERBARE GREIFER MIT SERVOPNEUMATISCHEN ANTRIEBEN" ROBOTERSYSTEME, SPRINGER VERLAG. BERLIN, DE, Bd. 5, Nr. 1, 1. März 1989 (1989-03-01), Seiten 57-64, XP000028746

## Beschreibung

Die Erfindung betrifft einen fluidbetätigten Greifer, mit einem Gehäuse, in dem sich ein Antriebsraum befindet, in dem mindestens zwei jeweils mit einem Greifelement verbundene oder verbindbare Antriebskolben aufeinanderfolgend angeordnet sind, die in der Richtung ihrer Aufeinanderfolge relativ zum Gehäuse und relativ zueinander unabhängig voneinander verstellbar und positionierbar sind und die den Antriebsraum in zwei jeweils nur von einem Antriebskolben begrenzte äußere Beaufschlagungskammern sowie in mindestens eine gleichzeitig von unmittelbar aufeinanderfolgenden Antriebskolben begrenzte innere Beaufschlagungskammer unterteilen.

Ein aus der RO-A-101596 bekannter fluidbetätigter Greifer dieser Art verfügt über ein Gehäuse mit einem länglichen Antriebsraum, in dem zwei unabhängig voneinander verstellbare Antriebskolben angeordnet sind, die jeweils mit einem Greifelement verbunden werden können. Die beiden Antriebskolben werden bei Fluidbeaufschlagung der zwischen ihnen liegenden inneren Beaufschlagungskammer voneinander wegbewegt und bei Entlüftung der inneren Beaufschlagungskammer durch in den beiden äußeren Beaufschlagungskammern angeordnete Federn aneinander angenähert. Auf diese Weise lässt sich eine Öffnungs- oder Schließbewegung der Greifelemente herbeiführen.

Die EP-A-0997237 beschreibt einen fluidbetätigten Greifer, bei dem die beiden äußeren Beaufschlagungskammern gleichzeitig mit Fluid beaufschlagt werden können, um die Antriebskolben einander anzunähern. Eine die beiden Antriebskolben mechanisch bewegungskoppelnde Synchronisationseinrichtung bewirkt eine stets gleichförmige Bewegung der beiden Antriebskolben und somit der Greifelemente. Die ständig steigenden Anforderungen an die moderne Automatisierungstechnik fordern verbesserte Systemeigenschaften bei gleichzeitig erhöhter Flexibilität und Einsatzbreite. Zur Realisierung komplexer Handhabungsgeräte bzw. Roboter und damit auszuführender Handlings-Vorgänge sind Greifer gefordert, die sich bei hoher Präzision sehr variabel einsetzen lassen. Diesen Anforderungen wird die bekannte Art von Greifern nicht immer in vollem Umfange gerecht.

Es ist daher die Aufgabe der vorliegenden Erfindung, einen fluidbetätigten Greifer zu schaffen, der über sehr flexible Einsatzmöglichkeiten verfügt.

Zur Lösung dieser Aufgabe sind bei einem fluidbetätigten Greifer der eingangs genannten Art Steuermittel vorgesehen, um die einzelnen Beaufschlagungskammern mit aufeinander abgestimmten Drücken so zu beaufschlagen, dass wenigstens zwei Antriebskolben wahlweise in einander entgegengesetzte Richtungen oder in der gleichen Richtung verstellbar sind.

Da die Antriebskolben untereinander keine mechanische Zwangskopplung besitzen, ist durch die kontrollierte, aufeinander abgestimmte Fluidbeaufschlagung der einzelnen Beaufschlagungskammern eine sehr flexible und variable Verstellung und/oder Positionierung der einzelnen Antriebskolben und der zugehörigen Greifelemente möglich. Bei entsprechender Ansteuerung können die Antriebskolben und somit die Greifelemente individuell bewegt werden. Bei Bedarf können unterschiedliche Verstellgeschwindigkeiten der Antriebskolben oder auch variable, nicht auf eine Mittenposition festgelegte Greifpositionen der Greifelemente eingestellt werden. Es sind Betriebsweisen möglich, bei denen die Greifelemente zum Ergreifen eines Gegenstandes zunächst in einander entgegengesetzte Richtungen verstellt werden, um im Anschluss daran, zum Verlagern des ergriffenen Gegenstandes, eine gleichzeitige, gleichgerichtete Verstellbewegung der Greifelemente vorzunehmen. Dadurch kann man unter Umständen sogar eine zusätzliche Handhabungseinheit einsparen, die bisher üblicherweise erforderlich ist, weil zum Verlagern eines ergriffenen Gegenstandes der gesamte Greifer verlagert werden muss.

Vorteilhafte Weiterbildungen der Erfindung gehen aus den Unteransprüchen hervor.

Für die überwiegende Zahl der Anwendungsfälle wird es ausreichend und vorteilhaft sein, wenn genau zwei Antriebskolben in dem Antriebsraum angeordnet sind. Es besteht jedoch die Möglichkeit, insbesondere zur Realisierung besonders komplexer Greifaufgaben, gleichzeitig mehr als zwei Antriebskolben gemeinsam in dem Antriebsraum unterzubringen, denen dann jeweils ein eigenes Greifelement zugeordnet werden kann. Durch entsprechend aufeinander abgestimmte Fluidbeaufschlagung der einzelnen Beaufschlagungskammern kann stets jeder Antriebskolben in einer gewünschten Weise verstellt und/oder positioniert werden, ohne dass hierbei die Position oder das Bewegungsverhalten der anderen Antriebskolben beeinflusst wird.

Zur kontrollierten Fluidbeaufschlagung der einzelnen Beaufschlagungskammern sind die Steuermittel zweckmäßigerweise mit Steuerventilmitteln ausgestattet, die eine individuelle Steuerung der Fluidzufuhr und Fluidabfuhr bezüglich der einzelnen Beaufschlagungskammern zulassen. Die Steuerventilmittel sind zweckmäßigerweise vom Typ stetiger Funktionsweise. Alternativ sind auch Schaltventile möglich, vorzugsweise mit pulsweitenmodulierter Ansteuerung.

Es ist des Weiteren von Vorteil, wenn die Steuermittel über Sensormittel zur Erfassung steuerungsrelevanter Betriebsparameter verfügen, um eine sehr exakte Verstellung und Positionierung der einzelnen Antriebskolben bzw. Greifelemente vornehmen zu können.

Durch Drucksensormittel können die in den einzelnen Beaufschlagungskammern herrschenden Drücke erfasst werden, um darauf aufbauend, durch entsprechende Ansteuerung von Steuerventilmitteln, die Fluidzufuhr und Fluidabfuhr bezüglich den einzelnen Beaufschlagungskammern zu variieren.

Durch Positionssensormittel kann die Position der einzelnen Antriebskolben oder Greifelemente erfasst werden. Ein besonders präzises Betriebsverhalten erhält man durch den Einsatz mindestens eines Wegmesssystems, das jede Momentanposition der einzelnen Antriebskolben ermitteln kann.

Durch Kraftsensormittel lassen sich genau definierte Greifkräfte der von den Antriebskolben betätigten Greifelemente realisieren.

Zweckmäßigerweise enthalten die Steuermittel eine elektronische Steuereinrichtung, die auf Basis erhaltener Sensorsignale, und unter Berücksichtigung vorgegebener Soll-Informationen für das Betriebsverhalten, die Ansteuerung von zur Beeinflussung der Fluidzufuhr und Fluidabfuhr bezüglich der Beaufschlagungskammern dienenden Steuerventilmitteln vornimmt. Die elektronische Steuereinrichtung kann zur Realisierung einer geregelten Betriebsweise ausgestaltet sein.

Die Fluidzufuhr und Fluidabfuhr bezüglich den Beaufschlagungskammern kann durchweg mittels gehäusefester Fluidkanalöffnungen geschehen. Hier wird dann zweckmäßigerweise durch geeignete Anschläge oder, vorzugsweise, unter Einsatz von Positionssensormitteln, dafür Sorge getragen, dass die Antriebskolben die verschiedenen gehäusefesten Fluidkanalöffnungen nicht überfahren können.

Als besonders vorteilhaft wird es allerdings angesehen, zumindest die Fluidzufuhr und Fluidabfuhr bezüglich den von zwei aufeinanderfolgenden Antriebskolben begrenzten inneren Beaufschlagungskammern über Fluidkanalöffnungen vorzunehmen, die an wenigstens einem der betreffenden Antriebskolben ausgebildet sind und dessen Bewegung stets mitmachen. Die von nur einem Antriebskolben begrenzten, außen liegenden Beaufschlagungskammern können entsprechend angesteuert werden, oder aber mittels gehäusefester Fluidkanalöffnungen.

Durch die mitbewegten Fluidkanalöffnungen ergibt sich unter anderem die vorteilhafte Möglichkeit, die Antriebskolben derart zu betreiben, dass sich ihre möglichen Verstellwege überlappen. Es besteht somit beispielsweise die Möglichkeit, jeden Antriebskolben an praktisch beliebiger Stelle entlang des Antriebsraumes zu positionieren, sofern die Positionseinnahme nicht von einem benachbarten Antriebskolben behindert wird.

Auf Basis des erfindungsgemäßen Greifers lassen sich verschiedene Greifertypen realisieren, beispielsweise Greifer mit im Betrieb sich verschwenkenden oder sich nur translatorisch bewegenden Greifelementen. Besonders vorteilhaft ist eine Ausgestaltung als Parallelgreifer.

Nachfolgend wird die Erfindung anhand der beiliegenden Zeichnung näher erläutert. In dieser zeigen:
- Fig. 1: eine bevorzugte Bauform des erfindungsgemäßen Greifers in einer perspektivischen Darstellung,
- Fig. 2: den Greifer aus Fig. 1 im Längsschnitt,
- Fig. 3: den Greifer aus Fig. 1 und 2 in schematischer Darstellung einschließlich einer bevorzugten Ausstattung mit Steuerungsmitteln und
- Fig. 4: eine stark schematisierte Darstellung einer weiteren Ausführungsform des fluidbetätigten Greifers.

Die in der Zeichnung dargestellten Greifer sind insbesondere für den Betrieb mit Druckluft als Betätigungsfluid ausgelegt. Ein Betrieb mit einem hydraulischen Medium ist aber ebenfalls möglich.

Die in der Zeichnung allgemein mit Bezugsziffer 1 bezeichneten fluidbetätigten Greifer enthalten jeweils eine Greifereinheit 2 mit einem beispielhaft quaderförmigen Gehäuse 3.

Das Gehäuse 3 definiert in seinem Innern einen zwischen zwei stirnseitigen Abschlusswänden 4a, 4b durchgehenden Antriebsraum 4 mit linearer Erstreckung. In dem Antriebsraum 4 sind mehrere Antriebskolben 5 aufeinanderfolgend angeordnet. Beim Ausführungsbeispiel sind genau zwei Antriebskolben 5 vorgesehen. Die Richtung der Aufeinanderfolge ist durch eine strichpunktierte Linie bei 6 angedeutet. Sie fällt mit der Längsachse des Antriebsraumes 4 zusammen.

Die Antriebskolben 5 sind am Außenumfang mit später noch erläuterten Dichtungsmitteln 31 ausgestattet, über die sie mit der peripheren Begrenzungswand 7 des Antriebsraumes 4 dichtend zusammenarbeiten. Die Begrenzungswand 7 erstreckt sich zwischen den beiden Abschlusswänden 4a, 4b und ist beim Ausführungsbeispiel Bestandteil eines rohrförmigen Mittelstückes 9, das zwischen den deckelartig ausgebildeten Abschlusswänden 4a, 4b platziert ist.

Die Antriebskolben 5 sind in der Richtung ihrer Aufeinanderfolge 6 - nachfolgend auch als "Verstellrichtung" bezeichnet - unabhängig voneinander sowohl relativ zum Gehäuse 3 als auch relativ zueinander verstellbar und positionierbar. Die individuellen Verstellbewegungen sind bei 11 durch Doppelpfeile gekennzeichnet. Da die Antriebskolben 5 zudem untereinander in keiner Weise mechanisch bewegungsgekoppelt sind - es liegt insbesondere keine mechanische Synchronisation der gegenseitigen Bewegungen vor -, besteht tatsächlich die Möglichkeit, jeden Antriebskolben 5 unabhängig vom anderen Antriebskolben 5 in der Verstellrichtung 6 zu verlagern und zu positionieren. Die einzige Einschränkung für dieses Bewegungsverhalten ist das Auflaufen der Antriebskolben 5 auf die Abschlusswände 4a, 4b oder auf einen-benachbarten Antriebskolben 5.

Durch die Antriebskolben 5 wird der von der einen bis zur anderen Abschlusswand ununterbrochen durchgehende Antriebsraum 4 fluiddicht in mehrere in der Verstellrichtung 6 aufeinanderfolgende Beaufschlagungskammern 12 unterteilt. Dabei ergeben sich zwei äußere Beaufschlagungskammern 12a, und zwar jeweils zwischen einem der Antriebskolben 5 und der diesem benachbarten Abschlusswand 4a bzw. 4b. Außerdem begrenzen die jeweils unmittelbar aufeinanderfolgenden Antriebskolben 5 gemeinsam eine zwischen ihnen liegende Beaufschlagungskammer 12, die als innere Beaufschlagungskammer 12b bezeichnet sei.

Die Ausführungsbeispiele enthalten im gemeinsamen Antriebsraum 4 jeweils zwei Antriebskolben 5. Daraus resultieren insgesamt drei Beaufschlagungskammern, und zwar die beiden äußeren Beaufschlagungskammern 12a sowie eine innere Beaufschlagungskammer 12b. Bei einer größeren Anzahl von Antriebskolben 5 vergrößert sich die Anzahl der inneren Beaufschlagungskammern 12b entsprechend. Entsprechend der linearen Erstreckung des Antriebsraumes 4 verläuft die Verstellrichtung 6 der Antriebskolben 5 ebenfalls linear.

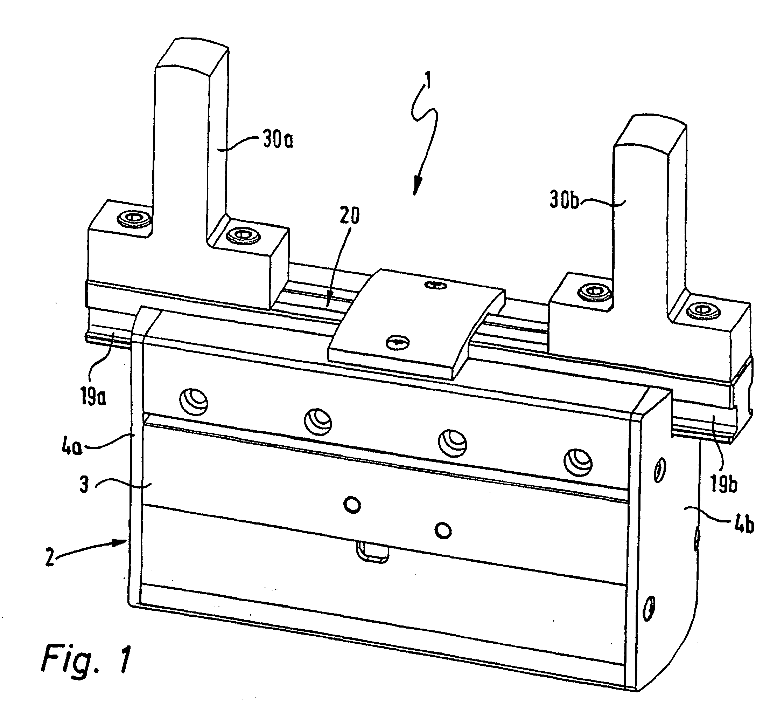

Beim Ausführungsbeispiel der Fig. 1 bis 3 ist das Gehäuse 3 im Umfangsbereich der beiden Antriebskolben 5 jeweils mit einem sich in der Verstellrichtung 6 erstreckenden Längsschlitz 16a, 16b versehen. Dieser mündet einerseits radial innen in den Antriebsraum 4 und radial außen zu einer Außenfläche des Gehäuses 1.

Jeder der beiden axial beabstandet zueinander angeordneten Längsschlitze 16a, 16b ist von einem Mitnehmer 17a, 17b durchsetzt, der eine Mitnahmeverbindung zwischen dem jeweils zugeordneten Antriebskolben 5 und einem von zwei außen am Gehäuse 3 verstellbar angeordneten Greifelementträgern 19a, 19b herstellt. Die Mitnehmer 17a, 17b sind beim Ausführungsbeispiel stiftartig ausgeführt, wobei sie mit ihren inneren Endbereichen in Ausnehmungen der Antriebskolben 5 und mit ihren äußeren Endbereichen in Ausnehmungen der Greifelementträger 19a, 19b fest verankert sind, beispielsweise durch Einpressen.

Die beiden Greifelementträger 19a, 19b sind jeweils längsseits neben einem der Antriebskolben 5 angeordnet und zweckmäßigerweise über eine Linearführungseinrichtung 20 parallel zu der Verstellrichtung 6 verschiebbar am Gehäuse 1 gelagert. Die Ausgestaltung der Linearführungseinrichtung 20 entspricht insbesondere der in der EP 0997237 A1 beschriebenen, so dass zur Vereinfachung auf die dortige Offenbarung verwiesen wird.

Jeder Greifelementträger 19a, 19b ist mit Befestigungsmitteln 21, beispielsweise in Gestalt von Gewindebohrungen, versehen, die ein lösbares bzw. auswechselbares Befestigen von Greifelementen 30a, 30b ermöglichen. Bei den Greifelementen 30a, 30b wird es sich meist um Greifbacken handeln.

Es wäre auch möglich, die Greifelemente 30a, 30b ohne Zwischenschaltung separater Greifelementträger 19a, 19b mit den Kolben 5 antriebsmäßig zu koppeln.

Jeder Antriebskolben 5 trägt zwei mit axialem Abstand koaxial zueinander angeordnete ringförmige Dichtungen 31, die so platziert sind, dass sich der jeweils zugeordnete Längsschlitz 16a bzw. 16b in jeder möglichen Axialposition des betreffenden Antriebskolbens 5 zwischen den beiden Dichtungen 31 befindet. Dadurch ist sichergestellt, dass unabhängig von der Position der Antriebskolben 5 kein Betätigungsfluid durch die Längsschlitze 16a, 16b hindurch entweichen kann.

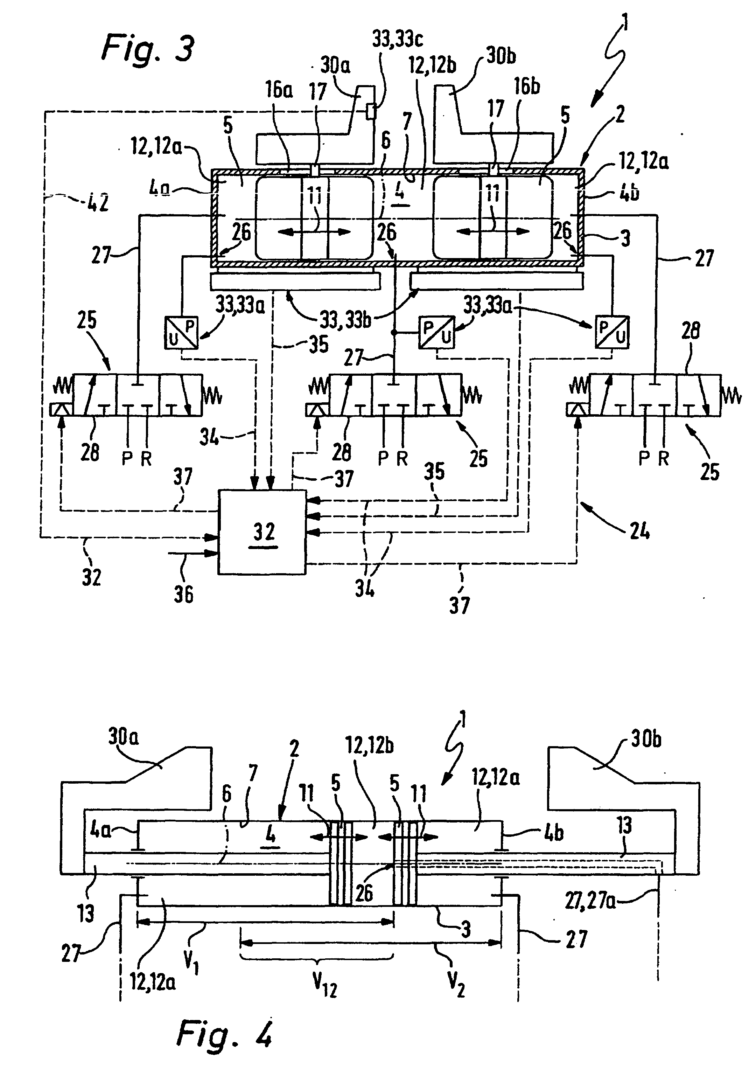

Bei der Bauform gemäß Fig. 4 erfolgt die antriebsmäßige Verbindung der Greifelemente 30a, 30b mit dem jeweils zugeordneten Antriebskolben 5 in abweichender Form. Hier greift an jedem Antriebskolben 5 eine Kolbenstange 13 an, die durch die jeweils zugeordnete Abschlusswand 4a, 4b hindurch aus dem Gehäuse 3 unter Abdichtung herausgeführt ist. Die Kolbenstangen 13 weisen in einander entgegengesetzte Richtungen. An den außerhalb des Gehäuses 3 liegenden Abschnitten einer jeweiligen Kolbenstange 13 ist eines der Greifelemente 30a bzw. 30b direkt oder unter Zwischenschaltung eines Greifelementträgers angeordnet. Wie im Falle der Bauformen gemäß Fig. 1 bis 3 ragen die Greifelemente 30a, 30b rechtwinkelig zur Verstellrichtung 6 zur gleichen Seite, so dass sie sich in der Verstellrichtung 6 gegenüberliegen. Werden die Antriebskolben 5 aufeinander zu oder voneinander weg bewegt, verringert oder vergrößert sich entsprechend der Abstand zwischen den Greifelementen 30a, 30b.

Die Verstellbewegungen 11 der Antriebskolben 5 werden durch Fluidbeaufschlagung der Beaufschlagungskammern 12 hervorgerufen. Dabei ändert sich, je nach Ansteuerung, die Länge von wenigstens zwei oder aller drei Beaufschlagungskammern. Die Übertragung der Verstellbewegungen auf die Greifelemente 30a, 30b geschieht unter Vermittlung der Mitnehmer 17a, 17b oder Kolbenstangen 13.

Die fluidbetätigten Greifer 1 sind jeweils mit Steuermitteln ausgestattet, die in ihrer Gesamtheit mit Bezugsziffer 24 gekennzeichnet sind und deren Aufbau und Wirkungsweise am besten anhand der Fig. 3 erläutert wird. Die Steuermittel 24 ermöglichen eine kontrollierte, aufeinander abgestimmte Fluidbeaufschlagung der einzelnen Beaufschlagungskammern 12.

Die Steuermittel 24 verfügen über Steuerventilmittel 25, durch die die Fluidzufuhr und Fluidabfuhr bezüglich der einzelnen Beaufschlagungskammern 12 individuell steuerbar ist.

In jede Beaufschlagungskammer 12 mündet eine Fluidkanalöffnung 26, die Bestandteil eines Fluidkanals 27 ist, der an ein Steuerventil 28 der Steuerventilmittel 25 angeschlossen ist. Durch elektrische Steuersignale, die den einzelnen Steuerventilen 28 durch eine elektronische Steuereinrichtung 32 über elektrische Steuerleitungen 37 zuführbar sind, können die Steuerventile 28 individuell in aufeinander abgestimmter Weise betätigt werden, um die Fluidbeaufschlagung der an sie jeweils angeschlossenen Beaufschlagungskammer 12 zu steuern.

Zu diesem Zweck können die Fluidkanäle 27 bei allen Ausführungsbeispielen wahlweise mit einer Druckquelle P oder eine Drucksenke R - letzteres ist, je nach Art des Betätigungsfluides, die Atmosphäre oder ein Tank - verbunden werden. Zudem besteht zweckmäßigerweise die Möglichkeit, die jeweilige Fluidleitung komplett abzusperren.

Bei den Ausführungsbeispielen sind die Steuerventile 28 - vorzugsweise ist jeder Beaufschlagungskammer 12 ein eigenes Steuerventil 28 zugeordnet - als Stetigventile ausgebildet, die in der Lage sind, variabel änderbare Strömungsquerschnitte zur Verfügung zu stellen, also auch Zwischenstellungen zwischen der Offenstellung und der Schließstellung. Man kann somit die Steuerventilmittel 25 als Stetig-Steuerventilmittel bezeichnen. Möglich wäre aber auch der Einsatz von Schaltventilen, vorzugsweise mit pulsweitenmodulierter Ansteuerung.

Durch die Steuerventilmittel 25 können die in den Beaufschlagungskammern 12 herrschenden Fluiddrücke individuell und unabhängig voneinander auf jeden gewünschten Wert eingestellt oder eingeregelt werden. Es besteht auf diese Weise die Möglichkeit, jeden Antriebskolben 5 individuell zu verstellen und zu positionieren, ohne den oder die anderen Antriebskolben zu beeinflussen.

Es ist möglich, durch entsprechend gesteuerte Fluidbeaufschlagung der Beaufschlagungskammern 12 ein exakt aufeinander abgestimmtes Bewegungsverhalten der Antriebskolben 5 und somit der mit diesen bewegungsgekoppelten Greifelemente 30a, 30b zu erzielen. So kann beispielsweise zunächst eine Relativbewegung der Antriebskolben 5 zum Zwecke des Ergreifens eines Gegenstandes durch die Greifelemente 30a, 30b erzielt werden, um anschließend, zum Verlagern des ergriffenen Gegenstandes, beide Antriebskolben 5 gleichzeitig und gleichförmig zu verstellen.

Um einen Gegenstand zu ergreifen, können die beiden Antriebskolben 5 beispielsweise zunächst in einander entgegengesetzte Richtungen aufeinander zu bewegt werden, bis ein zwischen den beiden Greifelementen 30a, 30b befindlicher Gegenstand ergriffen ist. Nach dem Ergreifen können die beiden Antriebskolben gleichzeitig mit gleicher Geschwindigkeit in der gleichen Richtung verlagert werden, um den ergriffenen Gegenstand entlang einer gewünschten Wegstrecke zu verlagern.

Auf diese Weise kann der fluidbetätigte Greifer - beim Ausführungsbeispiel als Parallelgreifer ausgebildet - zusätzlich zur Greiferfunktionalität auch noch die Funktionalität eines Linearantriebes beziehungsweise einer Handhabungsachse ausüben. Dabei besteht die Möglichkeit, durch entsprechend große Baulänge des Antriebsraumes 4 einen relativ großen Verstellweg für die Greifelemente und somit für den festgehaltenen Gegenstand zur Verfügung zu stellen.

Bei Handhabungsanwendungen ist es bisher üblich, einen Greifer an einem Linearantrieb zu befestigen, wobei durch den Greifer ein Gegenstand erfasst wird und anschließend, durch den Linearantrieb, der gesamte Greifer einschließlich des festgehaltenen Gegenstandes verlagert wird. Durch die erfindungsgemäße Bauform kann nun in vielen Fällen auf einen solchen separaten Linearantrieb verzichtet werden, weil die Verlagerungsfunktion von den Antriebskolben 5 mit übernommen wird. Auf diese Weise wird der bauliche Aufwand beträchtlich reduziert, und es lassen sich auch sehr hohe Verstellgeschwindigkeiten realisieren, weil die zu bewegenden Massen relativ gering sind.

Es versteht sich, dass man bei relativ großen Verstellbereichen der Antriebskolben 5 und dementsprechend großen Längenabmessungen der Längsschlitze 16a, 16b zweckmäßigerweise auf andere Abdichtmaßnahmen der Längsschlitze zurückgreift als vorstehend beschrieben ist. Zweckmäßigerweise verwendet man die bei so genannten Schlitzzylindern üblichen Abdichtsysteme, bei denen der Längsschlitz durch eine Dichtbandanordnung abgedichtet wird. Eine mögliche Realisierungsform wird in der US 5469775 beschrieben.

Um im Falle der Ausführungsformen gemäß Fig. 1 bis 3 beispielsweise den linken Antriebskolben 5 zu verstellen, kann der Fluiddruck in der linken äußeren Beaufschlagungskammer 12a erhöht oder verringert werden, während der Druck in der inneren Beaufschlagungskammer 12b und in der rechten äußeren Beaufschlagungskammer 12a konstant gehalten wird, um den rechten Antriebskolben 5 unverändert in der eingenommenen Position zu halten. Zur Bewegung des linken Antriebskolbens 5 wäre es ebenfalls möglich, den Fluiddruck in der linken äußeren Beaufschlagungskammer 12a konstant zu halten, während die Drücke in der inneren Beaufschlagungskammer 12b und in der rechten äußeren Beaufschlagungskammer 12a gemeinsam erhöht oder verringert werden. Durch vergleichbare Ansteuerung könnte auch lediglich der rechte Antriebskolben 5 bei stillstehendem linken Antriebskolben 5 verlagert werden oder besteht die Möglichkeit, beide Antriebskolben5 in beliebiger Weise relativ zueinander zu verstellen und zu positionieren.

Es ist offensichtlich, dass durch die variable Ansteuerbarkeit die Position, an dem ein Gegenstand ergriffen werden kann, nicht auf eine bestimmte Relativposition zum Gehäuse 3 festgelegt ist. Zwar besteht weiterhin die Möglichkeit, wie bei standardmäßigen Greifern, die Greifposition mittig bezüglich der Länge des Antriebsraumes 4 zu platzieren, wie dies bei 39 durch eine strichpunktierte Linie markiert ist. Ohne weiteres kann die Greifposition aber ausgehend von diesem mittleren Bereich gemäß Pfeilen 40 nach beiden Seiten verschoben werden. Man kann auf diese Weise Gegenstände an abwechselnden Greifpositionen ergreifen, ohne hierzu das Gehäuse 3 des Greifers 1 verlagern zu müssen.

Zur Gewährleistung einer sehr präzisen Funktionsweise ist es von Vorteil, wenn die Steuermittel 24 über Sensormittel 33 verfügen, mit denen sich steuerungsrelevante Betriebsparameter des Greifers erfassen lassen, die dann von der elektronischen Steuereinrichtung 32 ausgewertet und bei der Ansteuerung der Steuerventilmittel 25 berücksichtigt werden.

In diesem Zusammenhang sind bei den Ausführungsbeispielen unter anderem Drucksensormittel 33a vorhanden, mit denen sich die in den einzelnen Beaufschlagungskammern 12 momentan herrschenden Fluiddrücke erfassen lassen. Als Drucksensormittel 33a werden insbesondere handelsübliche Drucksensoren eingesetzt. Bei den Ausführungsbeispielen sind sie entweder an die zu den Beaufschlagungskammern 12 führenden Fluidkanäle 27 oder unmittelbar an die betreffende Beaufschlagungskammer 12 angeschlossen.

Die Drucksensormittel 33a erzeugen auf Basis des herrschenden Fluiddruckes ein elektrisches Drucksignal, das über Steuerleitungen 34 an die elektronische Steuereinrichtung 32 übermittelt und in dieser verarbeitet wird.

Darüber hinaus sind Sensormittel 33 in Gestalt von Positionssensormitteln 33b vorhanden, mit denen sich die aktuelle Position der einzelnen Antriebskolben 5 und/oder Greifelemente 30a, 30b erfassen lässt. Diese Positionssensormittel 33b sind zweckmäßigerweise in Gestalt eines oder mehrerer Wegmesssysteme ausgebildet, die die jeweilige Position erfassen können. Die Positionserfassung erfolgt insbesondere berührungslos, beispielsweise unter Verwendung von auf einem magnetoresistiven Funktionsprinzip basierenden Sensormitteln. Auch ein mechanischer Positionsabgriff, beispielsweise mittels Schleifkontakten und eventuell unter Einsatz von Widerstands-Messvorrichtungen ist möglich.

Zur Positionserfassung können den einzelnen Antriebskolben 5 wie abgebildet jeweils individuell gesonderte Positionssensormittel zugeordnet sein. Es besteht aber auch die Möglichkeit, ein und dieselben Positionssensormittel zur gemeinsamen Positionserfassung sämtlicher Antriebskolben 5 einzusetzen.

Die Positionssensormittel 33b rufen ein elektronisches Positionssignal hervor, das über geeignete Steuerleitungen 35 an die elektronische Steuereinrichtung 32 zur dortigen Verarbeitung übermittelt wird.

Somit kann die elektronische Steuereinrichtung 32 die Steuerventilmittel 25 über Steuerleitungen 37 so ansteuern, dass diese die Fluiddrücke in den Beaufschlagungskammern 12 so einstellen, dass die Antriebskolben 5 den gewünschten Verstellweg durchlaufen und in einer gewünschten Weise positioniert werden. Dabei werden die Positionen der einzelnen Antriebskolben 5 derart berücksichtigt, dass unerwünschte Kollisionen untereinander ausgeschlossen sind.

Bei Bedarf können die Steuermittel 28 auch Kraftsensormittel 33c enthalten, die zweckmäßigerweise an einem oder an beiden Greifelementen 30a, 30b angeordnet sind und die in der Lage sind, die auf den handzuhabenden Gegenstand ausgeübte Greifkraft zu erfassen. Daraus resultierende elektronische Greifkraftsignale können über Steuerleitungen 42 ebenfalls an die elektronische Steuereinrichtung 32 übermittelt werden.

Das gewünschte Betriebsverhalten lässt sich der elektronischen Steuereinrichtung 32 individuell durch entsprechende Soll-Informationen vorgeben, was in der Zeichnung durch Pfeil 36 angedeutet ist. Wenn die elektronische Steuereinrichtung 32 über Regelungsmittel verfügt, lässt sich auf diese Weise, durch Abgleich zwischen den Soll-Informationen und den von den Sensormitteln 33 gelieferten Ist-Informationen, eine elektronisch geregelte Betriebsweise realisieren.

Der Betriebsablauf der Antriebsvorrichtung 1 kann in der elektronischen Steuereinrichtung 32 durch ein Steuerprogramm abgespeichert sein. Es kann sich insbesondere um eine speicherprogrammierbare Steuerung handeln.

Bei dem Ausführungsbeispiel der Fig. 1 bis 3 sind die zur Zufuhr und Abfuhr des Betätigungsfluides verwendeten Fluidkanalöffnungen 26 ausschließlich gehäusefest angeordnet. Sie münden an geeigneter Stelle der den Antriebsraum 4 begrenzenden Wand in die jeweilige Beaufschlagungskammer 12 ein. Eine solche Bauform ist relativ einfach zu realisieren und eignet sich insbesondere für Fälle, bei denen sich die möglichen Verstellbereiche der Antriebskolben 5 in der Verstellrichtung 6 nicht zu überlappen brauchen. Jeder Antriebskolben 5 hat dabei seinen eigenen Verstellbereich, in den der andere Antriebskolben 5 nicht eindringt. Die Verstellbereichsgrenzen befinden sich an derjenigen Axialposition, an der die Fluidkanalöffnungen 26 platziert sind. Ein unerwünschtes Überfahren dieser Fluidkanalöffnungen durch die Antriebskolben 5 lässt sich unter Verwendung der Positionssensormittel 33b problemlos verhindern. Alternativ oder zusätzlich könnten aber auch gehäusefeste mechanische Wegbegrenzungsanschläge vorgesehen werden.

Es sind allerdings ohne weiteres Bauformen realisierbar, bei denen sich die möglichen Verstellwege der Antriebskolben 5 in der Verstellrichtung 6 überlappen. In der Fig. 4 ist ein entsprechendes Ausführungsbeispiel illustriert. Man erkennt dort die beiden Verstellbereiche V₁ und V₂ der beiden Antriebskolben 5, die sich in einem mittleren Bereich V₁₂ überlappen. Jeder der beiden Antriebskolben 5 kann in den Überlappungsbereich V₁₂ verlagert werden, sofern er vom jeweils anderen Antriebskolben nicht daran gehindert wird. Die Länge des Überlappungsbereiches V₁₂ lässt sich durch die konkrete Konstruktion festlegen, sie kann sich sogar über zumindest annähernd die gesamte Länge des Antriebsraumes-4 erstrecken. Durch eine solche Bauform wird gewährleistet, dass die Stelle, an der ein handzuhabender Gegenstand ergriffen werden kann, in weiten Bereichen variiert werden kann.

Um dies zu begünstigen, befindet sich zumindest diejenige Fluidkanalöffnung 26, die für die Druckbeaufschlagung der inneren Beaufschlagungskammer 12b zuständig ist, nicht ortsfest am Gehäuse 3, sondern an einem der beiden, die innere Beaufschlagungskammer 12b begrenzenden Antriebskolben 5. Die Fluidkanalöffnung 26 bewegt sich folglich synchron mit dem entsprechenden Antriebskolben 5 mit, so dass peripher am Antriebsraum 4 keine Fluidkanalöffnungen 26 benötigt werden, die den Verstellbereich begrenzen.

Um die Mobilität der Antriebskolben 5 zu gewährleisten, kann der zu der mitbewegbaren Fluidkanalöffnung 26 führende Fluidkanal zumindest teilweise Bestandteil einer flexiblen Fluidleitung 27a sein.

Bei der Ausführungsform gemäß Fig. 4 erfolgt die Fluidversorgung der inneren Beaufschlagungskammer 12b durch eine der Kolbenstangen 13 hindurch, die vom zugeordneten Fluidkanal 27 durchsetzt wird. Bei Bauformen gemäß Fig. 1 bis 3 kann die Fluidversorgung zu einer an einem Antriebskolben 5 angeordneten Fluidkanalöffnung problemlos durch den zugeordneten Mitnehmer 17a bzw. 17b hindurch erfolgen.

Prinzipiell kann die Fluideinspeisung zu sämtlichen Beaufschlagungskammern 12 über die Antriebskolben 5 vorgenommen werden. Es wäre beispielsweise möglich, an ein und demselben Antriebskolben 5 an entgegengesetzten Axialseiten zu den dort befindlichen Beaufschlagungskammern führende Fluidkanalöffnungen 26 vorzusehen. Zur Reduzierung des konstruktiven Aufwandes wird es jedoch als vorteilhaft erachtet, zumindest hinsichtlich der äußeren Beaufschlagungskammern 12a auf eine Fluidbeaufschlagung mittels gehäusefester Fluidkanalöffnungen 26 zurückzugreifen.

Bei allen Ausführungsbeispielen können die Steuermittel 24 zumindest teilweise am oder im Gehäuse 3 des fluidbetätigten Greifers angeordnet sein. Bei der Ausführungsform der Fig. 1 bis 3 befinden sich die Steuerventilmittel 25 geschützt in einem zur Umgebung hin abgeschirmten Aufnahmeraum 45 des Gehäuses 3. Der Aufnahmeraum 45 ist zweckmäßigerweise längsseits neben dem Antriebsraum 4 angeordnet.

Auch die Drucksensormittel 33a und Positionssensormittel 33b sind am Gehäuse 3 befestigt.

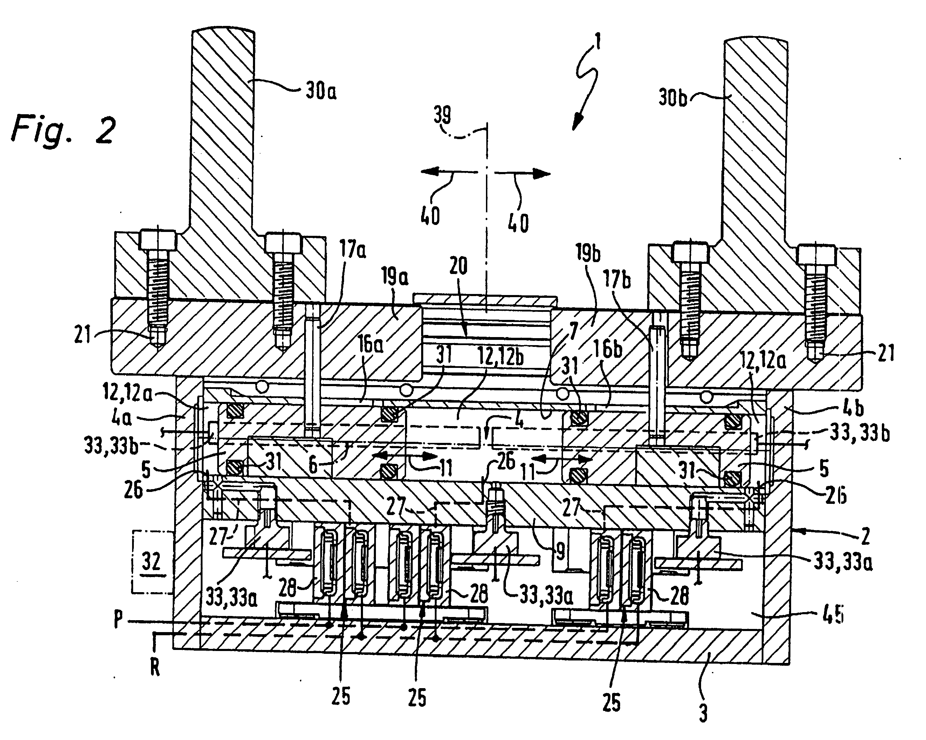

Die elektronische Steuereinrichtung 32 kann ebenfalls wahlweise extern oder - wie in Fig. 2 strichpunktiert angedeutet - unmittelbar an der Greifereinheit 2 angeordnet sein.

Die komplette Ausstattung der Greifereinheit 2 mit den Steuermitteln 24 und den Sensormitteln 33 ermöglicht den Aufbau eines hochintegrierten Greifers, an den lediglich noch die für die Fluidversorgung und für die elektrische Versorgung erforderlichen Leitungen angeschlossen werden müssen, um ihn in einen betriebsbereiten Zustand zu versetzen.

## Patentansprüche

1. Fluidbetätigter Greifer, mit einem Gehäuse (3), in dem sich ein Antriebsraum (4) befindet, in dem mindestens zwei jeweils mit einem Greifelement (30a, 30b) verbundene oder verbindbare Antriebskolben (5) aufeinanderfolgend angeordnet sind, die in der Richtung ihrer Aufeinanderfolge (6) relativ zum Gehäuse (3) und relativ zueinander unabhängig voneinander verstellbar und positionierbar sind und die den Antriebsraum (4) in zwei jeweils nur von einem Antriebskolben (5) begrenzte äußere Beaufschlagungskammern (12, 12a) sowie in mindestens eine gleichzeitig von unmittelbar aufeinanderfolgenden Antriebskolben (5) begrenzte innere Beaufschlagungskammer (12, 12b) unterteilen, **dadurch gekennzeichnet, dass** Steuermittel (24) vorgesehen sind, um die einzelnen Beaufschlagungskammern (12) mit aufeinander abgestimmten Drücken so zu beaufschlagen, dass wenigstens zwei Antriebskolben (5) wahlweise in einander entgegengesetzte Richtungen oder in der gleichen Richtung verstellbar sind.

2. Greifer nach Anspruch 1, **gekennzeichnet durch** zwei Antriebskolben (5) in dem gemeinsamen Antriebsraum (4).

3. Greifer nach Anspruch 1 oder 2, **dadurch gekennzeichnet, dass** die Steuermittel (24) über Steuerventilmittel (25) verfügen, durch die die Fluidzufuhr und Fluidabfuhr bezüglich den einzelnen Beaufschlagungskammern (12) individuell steuerbar ist.

4. Greifer nach Anspruch 3, **dadurch gekennzeichnet, dass** die Steuerventilmittel (25) als Stetig-Steuerventilmittel oder als pulsweitenmodulierte Schaltventilmittel ausgebildet sind.

5. Greifer nach einem der Ansprüche 1 bis 4, **dadurch gekennzeichnet, dass** die Steuermittel (24) über Sensormittel (33) zur Erfassung steuerungsrelevanter Betriebsparameter verfügen.

6. Greifer nach einem der Ansprüche 1 bis 5, **dadurch gekennzeichnet, dass** die Steuermittel (24) über Drucksensormittel (33a) zur Erfassung der in den einzelnen Beaufschlagungskammern (12) herrschenden Drücke verfügen.

7. Greifer nach Anspruch 6, **dadurch gekennzeichnet, dass** die Drucksensormittel (33a) an die zu den Beaufschlagungskammern (12) führenden Fluidkanäle (27) oder direkt an die Beaufschlagungskammern (12) angeschlossen sind.

8. Greifer nach einem der Ansprüche 1 bis 7, **dadurch gekennzeichnet, dass** die Steuermittel (24) über Positionssensormittel (33b) zur Erfassung der Position der einzelnen Antriebskolben (5) verfügen.

9. Greifer nach Anspruch 8, **dadurch gekennzeichnet, dass** die Positionssensormittel (33b) mindestens ein Wegmesssystem enthalten.

10. Greifer nach einem der Ansprüche 1 bis 9, **dadurch gekennzeichnet, dass** die Steuermittel (24) über Kraftsensormittel (33c) zur Erfassung der Greifkraft der Greifelemente (30a, 30b) verfügen.

11. Greifer nach einem der Ansprüche 1 bis 10, **dadurch gekennzeichnet, dass** die Steuermittel (24) eine elektronische Steuereinrichtung (32) enthalten, die auf Basis erhaltener Sensorsignale und unter Berücksichtigung vorgegebener Soll-Informationen für das Betriebsverhalten, die Ansteuerung von zur Beeinflussung der Fluidzufuhr und Fluidabfuhr bezüglich den Beaufschlagungskammern (12) dienenden Steuerventilmitteln (25) vornimmt.

12. Greifer nach Anspruch 11, **dadurch gekennzeichnet, dass** die elektronische Steuereinrichtung (32) über Regelungsmittel zur Realisierung eines geregelten Betriebsverhaltens des Greifers verfügt.

13. Greifer nach einem der Ansprüche 1 bis 12, **dadurch gekennzeichnet, dass** zur Fluidzufuhr und Fluidabfuhr bezüglich einer oder mehrerer Beaufschlagungskammern (12) jeweils mindestens eine gehäusefeste Fluidkanalöffnung (26) in die betreffende Beaufschlagungskammer (12) ausmündet.

14. Greifer nach Anspruch 13, **dadurch gekennzeichnet, dass** die Fluidzufuhr und Fluidabfuhr bezüglich sämtlicher Beaufschlagungskammern (12) durch gehäusefeste Fluidkanalöffnungen (26) erfolgt.

15. Greifer nach einem der Ansprüche 1 bis 14, **dadurch gekennzeichnet, dass** zur Fluidzufuhr und Fluidabfuhr, zumindest bezüglich einer jeweiligen inneren Beaufschlagungskammer (12, 12b), an mindestens einem die betreffende Beaufschlagungskammer (12, 12b) begrenzenden Antriebskolben (5) eine mit diesem mitbewegbare und zu der betreffenden Beaufschlagungskammer (12, 12b) ausmündende Fluidkanalöffnung (26) vorgesehen ist.

16. Greifer nach einem der Ansprüche 1 bis 15, **gekennzeichnet durch** eine Ausgestaltung, bei der sich die möglichen Verstellbereiche (V₁, V₂) zumindest zweier unmittelbar aufeinanderfolgender Antriebskolben (5) in der Verstellrichtung (6) überlappen.

17. Greifer nach einem der Ansprüche 1 bis 16, **dadurch gekennzeichnet, dass** die Steuermittel (24) zumindest teilweise am oder im Gehäuse (3) des Greifers angeordnet sind.

18. Greifer nach einem der Ansprüche 1 bis 17, **gekennzeichnet durch** eine Ausgestaltung als Parallelgreifer.

## Claims

1. Fluid-actuated gripper with a housing (3) containing a drive chamber (4) in which at least two driving pistons (5), each connected or connectable to a gripper element (30a, 30b), are mounted consecutively and may be moved and positioned relative to the housing (3) and relative to one another, independently of one another in the direction of their succession (6), and which divide the drive chamber (4) into two outer pressurisation chambers (12, 12a) bounded only by a driving piston (5), and also into at least one inner pressurisation chamber (12, 12b) simultaneously bounded by the directly consecutive driving piston (5), **characterised in that** control means (24) are provided for pressurising the individual pressurisation chambers (12) with pressures matched to one another in such a way that at least two driving pistons (5) may be moved alternatively in opposite directions or in the same direction.

2. Gripper according to claim. 1, **characterised by** two driving pistons (5) in the common drive chamber (4).

3. Gripper according to claim 1 or 2, **characterised in that** the control means (24) have control valve means (25) through which the supply and removal of fluid in respect of the individual pressurisation chambers (12) may be individually controlled.

4. Gripper according to claim 3, **characterised in that** the control valve means (25) are in the form of infinite-position control valve means or pulse-width-modulated switching valve means.

5. Gripper according to any of claims 1 to 4, **characterised in that** the control means (24) have sensor means (33) for the detection of control-relevant operating parameters.

6. Gripper according to any of claims 1 to 5, **characterised in that** the control means (24) have pressure sensor means (33a) for the detection of pressures prevailing in the individual pressurisation chambers (12).

7. Gripper according to claim 6, **characterised in that** the pressure sensor means (33a) are connected to the fluid passages (27) leading to the pressurisation chambers (12) or directly to the pressurisation chambers (12).

8. Gripper according to any of claims 1 to 7 **characterised in that** the control means (24) have position sensor means (33b) for detecting the position of the individual driving pistons (5).

9. Gripper according to claim 8, **characterised in that** the position sensor means (33b) contain one or more position measuring systems.

10. Gripper according to any of claims 1 to 9, **characterised in that** the control means (24) have force sensor means (33c) to detect the gripping force of the gripper elements (30a, 30b).

11. Gripper according to any of claims 1 to 10, **characterised in that** the control means (24) contain an electronic control unit (32) which, on the basis of sensor signals obtained and taking into account preset value data for the operating behaviour, undertakes the control of control valve means (25) which serve to influence the supply and removal of fluid to and from the pressurisation chambers (12).

12. Gripper according to claim 11, **characterised in that** the electronic control unit (32) has regulating means to provide for regulated operating behaviour of the gripper.

13. Gripper according to any of claims 1 to 12, **characterised in that**, for the supply and removal of fluid in respect of one or more pressurisation chambers (12), in each case at least one fluid passage opening (26) fixed to the housing leads into the pressurisation chamber (12) concerned.

14. Gripper according to claim 13, **characterised in that** the supply and removal of fluid in respect of all pressurisation chambers (12) is effected through fluid passage openings (26) fixed to the housing.

15. Gripper according to any of claims 1 to 14, **characterised in that**, for the supply and removal of fluid, at least in respect of any particular inner pressurisation chamber (12, 12b), at least one driving piston (5) bounding the pressurisation chamber (12, 12b) concerned is provided with a fluid passage opening (26) capable of moving with the driving piston and leading to the pressurisation chamber (12, 12b) concerned.

16. Gripper according to any of claims 1 to 15, **characterised by** a configuration in which the possible movement ranges (V₁, V₂) of at least two directly consecutive driving pistons (5) overlap in the direction of movement (6).

17. Gripper according to any of claims 1 to 16, **characterised in that** the control means (24) are located at least partly on or in the housing (3) of the gripper.

18. Gripper according to any of claims 1 to 17, **characterised by** design as a parallel gripper.

## Revendications

1. Organe de préhension actionné par un fluide, comprenant un boîtier (3) dans lequel se trouve un espace de commande (4) dans lequel au moins deux pistons de commande (5), reliés ou susceptibles d'être reliés à un élément de préhension (30a, 30b), sont montés de façon successive et sont déplaçables et positionnables, suivant la direction de leur montage successif (6), par rapport au boîtier (3) et l'un par rapport à l'autre, indépendamment l'un de l'autre, et qui divisent l'espace de commande (4) en deux chambres d'admission externes (12, 12a), délimitées chacune par un piston de commande (5) seulement, ainsi qu'en au moins une chambre d'admission interne (12, 12b), délimitée simultanément par les pistons de commande (5) qui se suivent immédiatement, **caractérisé en ce que** sont prévus des moyens de commande (24) pour solliciter les différentes chambres d'admission (12) avec des pressions harmonisées les unes aux autres de telle sorte qu'au moins deux pistons de commande (5) soient déplaçables, au choix, dans des directions opposées ou dans la même direction.

2. Organe de préhension selon la revendication 1, **caractérisé par** la présence de deux pistons de commande (5) dans l'espace de commande (4) commun.

3. Organe de préhension selon la revendication 1 ou 2, **caractérisé en ce que** les moyens de commande (24) disposent de moyens de commande à soupape (25) permettant de commander individuellement l'amenée et l'évacuation de fluide dans les différentes chambres d'admission (12).

4. Organe de préhension selon la revendication 3, **caractérisé en ce que** les moyens de commande à soupape (25) sont conformés en moyens de commande à soupape à fonctionnement continu, ou en moyens de commande à soupape à modulation d'impulsions en largeur.

5. Organe de préhension selon l'une des revendications 1 à 4, **caractérisé en ce que** les moyens de commande (24) sont équipés de capteurs (33) destinés à détecter des paramètres de fonctionnement concernant la commande.

6. Organe de préhension selon l'une des revendications 1 à 5, **caractérisé en ce que** les moyens de commande (24) sont équipés de capteurs de pression (33a) destinés à détecter les pressions qui règnent dans les différentes chambres d'admission (12).

7. Organe de préhension selon la revendication 6, **caractérisé en ce que** les capteurs de pression (33a) sont raccordés aux canaux à fluide (27) qui mènent aux chambres d'admission (12), ou directement aux chambres d'admission (12).

8. Organe de préhension selon l'une des revendications 1 à 7, **caractérisé en ce que** les moyens de commande (24) sont équipés de capteurs de position (33b) destinés à détecter la position des différents pistons de commande (5).

9. Organe de préhension selon la revendication 8, **caractérisé en ce que** les capteurs de position (33b) contiennent au moins un système de mesure de déplacement.

10. Organe de préhension selon l'une des revendications 1 à 9, **caractérisé en ce que** les moyens de commande (24) sont équipés de capteurs de force (33c) destinés à détecter la force de préhension des éléments de préhension (30a, 30b).

11. Organe de préhension selon l'une des revendications 1 à 10, **caractérisé en ce que** les moyens de commande (24) contiennent un dispositif de commande électronique (32) qui, sur la base des signaux qu'il reçoit des capteurs et en tenant compte d'informations de consigne prédéterminées concernant le comportement en fonctionnement, assure la commande de moyens de commande à soupape (25) qui servent à influencer l'amenée de fluide et l'évacuation de fluide dans les chambres d'admission (12).

12. Organe de préhension selon la revendication 11, **caractérisé en ce que** le dispositif de commande électronique (32) est équipé de moyens de régulation pour obtenir un comportement en fonctionnement régulé de l'organe de préhension.

13. Organe de préhension selon l'une des revendications 1 à 12, **caractérisé en ce que**, pour assurer l'amenée et l'évacuation de fluide dans une ou plusieurs chambres d'admission (12), au moins une ouverture de canal à fluide (26), solidaire du boîtier, débouche dans la chambre d'admission (12) correspondante.

14. Organe de préhension selon la revendication 13, **caractérisé en ce que** l'amenée et l'évacuation de fluide dans toutes les chambres d'admission (12) s'effectuent par des ouvertures de canaux à fluide (26) solidaires du boîtier.

15. Organe de préhension selon l'une des revendications 1 à 14, **caractérisé en ce que**, pour assurer l'amenée et l'évacuation de fluide, au moins dans la chambre d'admission interne (12, 12b) concernée, une ouverture de canal à fluide (26) est prévue, sur au moins un piston de commande (5) qui délimite la chambre d'admission (12, 12b) concernée, ouverture qui peut se déplacer avec ce piston et qui débouche dans la chambre d'admission (12, 12b) concernée.

16. Organe de préhension selon l'une des revendications 1 à 15, **caractérisé par** une configuration selon laquelle les plages de déplacement possible (V₁, V₂) d'au moins deux pistons de commande (5), se suivant immédiatement, se recouvrent dans la direction de déplacement (6).

17. Organe de préhension selon l'une des revendications 1 à 16, **caractérisé en ce que** les moyens de commande (24) sont disposés, au moins partiellement, sur ou dans le boîtier (3) de l'organe de préhension.

18. Organe de préhension selon l'une des revendications 1 à 17, **caractérisé en ce qu'**il est conformé en pince à mouvements parallèles.
